# EUROPEAN PATENT SPECIFICATION

(11) **EP 1 879 366 B1**
(45) Date of publication and mention of the grant of the patent: **25.08.2010**
(21) Application number: 06117204.5
(22) Date of filing: 14.07.2006
(51) Int. Cl.: H04M 1/2745, G06F 11/14

(54) **System and method to backup and provision a mobile device**
System und Verfahren zur Datensicherung und zur Einrichtung eines mobilen Endgerätes
Système et procédé de sauvegarde et d'installation d'un terminal mobile

(43) Date of publication of application: 16.01.2008
(73) Proprietor: RESEARCH IN MOTION LIMITED, Waterloo, Ontario N2L 3W8 (CA)
(72) Inventor: Brown, Michael K, Kitchener Ontario N2M 2Z2 (CA); Kirkup, Michael G., Waterloo, Ontario N2J 4Y3 (CA); Brown, Michael S, Waterloo Ontario N2K 4B1 (CA)
(74) Representative: Patel, Binesh

(56) References cited:
- EP-A- 1 191 767
- WO-A-2004/025933
- WO-A2-2004/091229
- GB-A- 2 378 854
- US-A1- 2004 235 514
- "Sony Ericsson W800i" [Online] 2005, SONY ERICSSON AB , XP002413530 Retrieved from the Internet: URL:http://www.sonyericsson.com/downloads/ W800i_UG_AddOn2_R1a_EN.pdf> [retrieved on 2007-01-08] * pages 80,81 *

## Description

### FIELD

The present application relates generally to mobile devices and, more specifically, to a system and method for provisioning a mobile device.

### BACKGROUND

The mobile device market is currently experiencing explosive growth as mobile devices evolve to deliver increasingly critical services such as organizational planning, wireless telephone, email, Internet browsing, and related services. However, conventional portable devices synchronize with a personal computer such as a desktop computer, typically through a cradle or wired connection. If the user's data that is stored on the mobile device becomes corrupted or inaccessible while the user is away from his computer or on a business trip, the user is not able to access the user's data until such time as the user returns to his or her computer and can synchronize the mobile device with the computer to restore the data. Additionally, information critical to wireless services used by the mobile device may become corrupted, thus cutting off communication to and from the mobile device. In a best case scenario, the user must then contact a system administrator to retrieve a password that can be used to initiate a wireless synchronization process, or other instructions on how to repair the device.

Accordingly, a portable system that provides for the ability for on-the-fly backup and restore of critical data is desired.
US-A-2004/0235514 discloses a system in which a mobile device communicates with a back up device via a short range wireless link to back up data entered into the mobile device. The back up device is a flash memory and can be attached to the user's clothing or attached to a key fob for example. The data backed up is in the nature of user profile data, an International Mobile Equipment Identity number (IMEI), and user settings and preferences.

### SUMMARY

According to one aspect, there is provided a mobile communications device provisioning system, comprising: a mobile communications device, comprising: a controller comprising at least one processor, for controlling operation of the mobile communications device; a display coupled to the controller for displaying information; a user input device coupled to the device controller; a storage element coupled to the device controller for storing user data; a radio frequency ("RF") communications system for exchanging RF signals with a wireless network; and a short range communications system coupled to the controller; a smart card reader comprising; a controller comprising at least one processor for controlling operation of the smart card reader; first means for storing data having provisioning data stored thereon, the provisioning data comprising service data which comprises service books, the service books comprising routing information enabling the mobile communications device to communicate over wireless network and to access data services; and a short range communications system coupled to the controller for exchanging signals with the short range communications system; the mobile communications device controller and the smart card reader controller being collectively operable to establish a wireless communications link between the mobile communications device and smart card reader through the respective short range communications systems, provision the mobile communications device by sending at least some of the service data stored on the smart card reader through the wireless communications link, and store the service data sent through the wireless communications link on the storage element of the mobile communications device; wherein the device controller is operable to automatically determine if selected data stored on the storage element that corresponds to the provisioning data has been erased or corrupted and, when provisioning data has been erased or corrupted, send a request to the smart card reader to provision the mobile communications device with the provisioning data after establishment of the communications link.

In another aspect there is provided a method for provisioning a mobile communications device from a smart card reader, the method comprising: storing at the smart card reader provisioning data for the mobile communications device, the provisioning data comprising service books, the service books comprising routing information enabling the mobile communications device to communicate over wireless network and to access data services; automatically determining if provisioning data stored on the mobile communications device has been erased or corrupted;establishing a wireless communications link between the smart card reader and the mobile communications device; sending a request to the smart card reader to provision the mobile communications device with the provisioning data after establishment of the communications link after establishing the wireless communications link when provisioning data has been erased or corrupted; and sending the provisioning data over the wireless communications link from the smart card reader to the mobile communications device and storing the provisioning data at the mobile communications device.

In another aspect there is provided a smart card reader, comprising: first means for storing data having provisioning data stored thereon, the provisioning data comprising service books, the service books comprising routing information enabling the mobile communications device to communicate over wireless network and to access data services; means for establishing a wireless communications link with the mobile communications device; means for receiving a request to provision the mobile communications device with the provisioning data after establishment of the communications link when provisioning data has been determined to be erased or corrupted via automatic detection means of the mobile communications device; and means for sending the provisioning data over the wireless communications link to the mobile communications device.
In another aspect the invention provides a computer program product comprising a computer readable medium having program code for causing a smart card reader to implement the method according to the invention when the program code is executed by a processor of the smart card reader.

### BRIEF DESCRIPTION OF THE DRAWINGS

Reference will now be made to the drawings, which show by way of example, embodiments of the invention, and in which:

FIG. 1 shows in block diagram form a communication system suitable for an electronic device in accordance with one embodiment;

FIG. 2 shows in diagrammatic form a mobile device according to one embodiment;

FIG. 3 shows in diagrammatic form one embodiment of a smart card reader for use with the mobile device shown in FIG. 2;

FIG. 4 shows in flow chart form one embodiment of a pairing process for use with the mobile device shown in FIG. 2 and the smart card reader shown in FIG. 3;

FIG. 5 shows in flow chart form an auto backup method in accordance with one embodiment; and

FIG. 6 shows in flow chart form a reprovisioning method in accordance with one embodiment.

In the drawings, like reference numerals denote like elements or features.

### DESCRIPTION OF EXAMPLE EMBODIMENTS

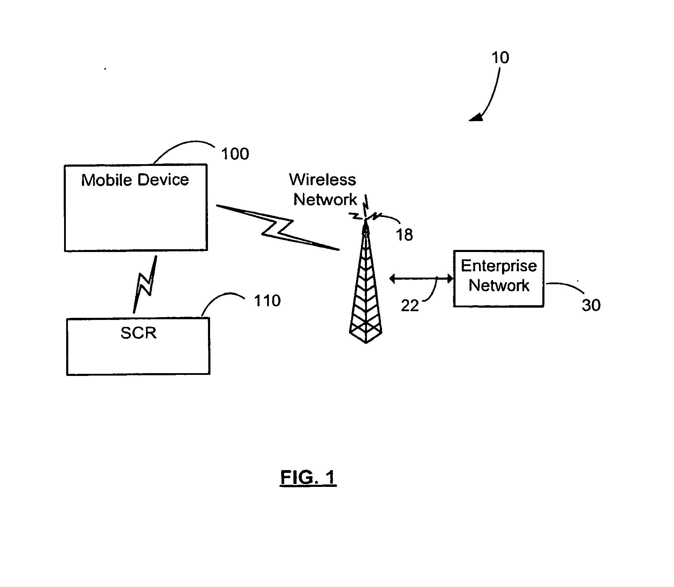

Reference is made to FIG. 1, which shows an example of a communication system 10 that includes one or more mobile devices 100 (only one of which is shown in FIG. 1) that are enabled to communicate with one or more wireless networks 18. The wireless network 18 may be implemented as a packet-based cellular network that includes a number of base stations each providing wireless Radio Frequency (RF) coverage to a corresponding area or cell. For example the wireless network 18 could conform to one or more of the following, among other things: Mobitex Radio Network, DataTAC, GSM (Global System for Mobile Communication), GPRS (General Packet Radio System), TDMA (Time Division Multiple Access), CDMA (Code Division Multiple Access), CDPD (Cellular Digital Packet Data), iDEN (integrated Digital Enhanced Network), EvDO (Evolution-Data Optimized) or various other third generation networks such as EDGE (Enhanced Data rates for GSM Evolution) or UMTS (Universal Mobile Telecommunications Systems), or various other 3.5G networks such as HSPDA (High-Speed Downlink Packet Access).

In some embodiments, instead of or in addition to a wide area wireless network, network 18 can include a local wireless area network, such as for example a wireless local area network that conforms to IEEE 802.11 standards such as 802.11b and/or 802.11g. In at least some example embodiments, the wireless network 18 is connected through intermediate communications links 22, comprising for example the Internet, to one or more enterprise networks 30 each associated with respective mobile devices 100, such that the mobile devices 100 are each enabled to exchange electronic messages and other information with the enterprise networks that they are associated with.

At least some of the mobile devices 100 have a further associated secondary mobile device in the form of a smart card reader (SCR) 110.

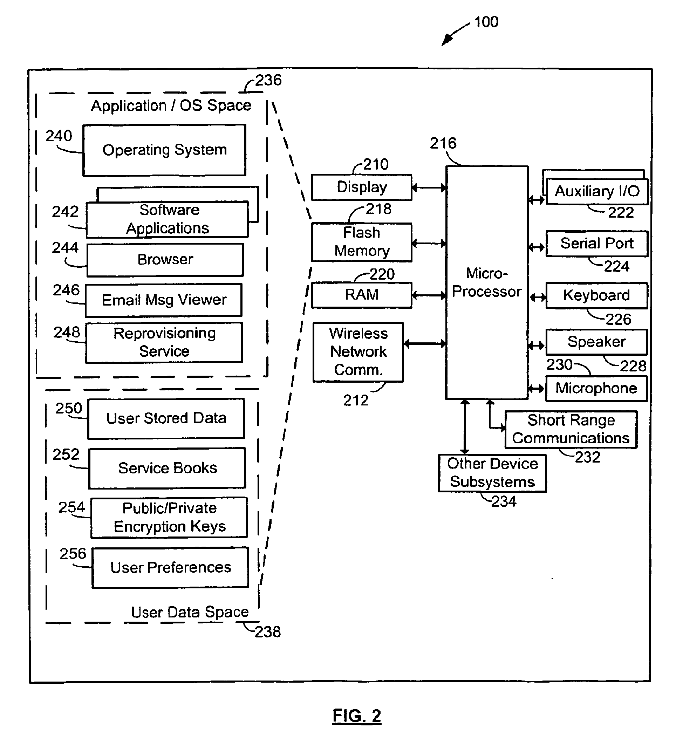

Reference is next made to FIG. 2, which shows in greater detail an embodiment of the mobile device 100. The mobile device 100 includes a display sub-system 210, a wireless network communication subsystem 212 for two-way communications with the wireless network 18 (FIG. 1). According to one embodiment, the communications subsystem 212 includes antennas (not shown), RF transceivers (not shown), and some signal processing capabilities, implemented, for example, by a digital signal processor (not shown). The mobile device 100 also includes a controller in the form of at least one microprocessor 216 which is suitably programmed to control the overall operation and functions of the mobile device 100, which are described in more detail below. The mobile device 100 includes peripheral devices or subsystems such as a flash memory 218, a random access memory (RAM) 220, an auxiliary input/output (I/O) subsystem 222 (e.g., a scrollwheel), a serial port 224 (e.g., a USB port), an input device 226 (e.g., a keyboard or keypad), a speaker 228, a microphone 230, a short-range communications subsystem 232 (e.g., an infrared transceiver, wireless bus protocol such as a Bluetooth™ system, or any other means of local wireless communications), and any other device subsystems generally designated by reference 234.

The microprocessor 216 operates under stored program control with code or firmware being stored in the flash memory 218 (or other type of non-volatile memory device or devices). As depicted in FIG. 2, the flash memory 218 is logically partitioned into two separate spaces, an application and operating system space 236 and a user data space 238. The application and operating system space 236 includes stored programs (e.g., firmware) comprising an operating system program or code module 240 and other programs or software applications indicated generally by reference 242. The software applications 242 can for example include a Web browser 244 and an email message viewer 246.

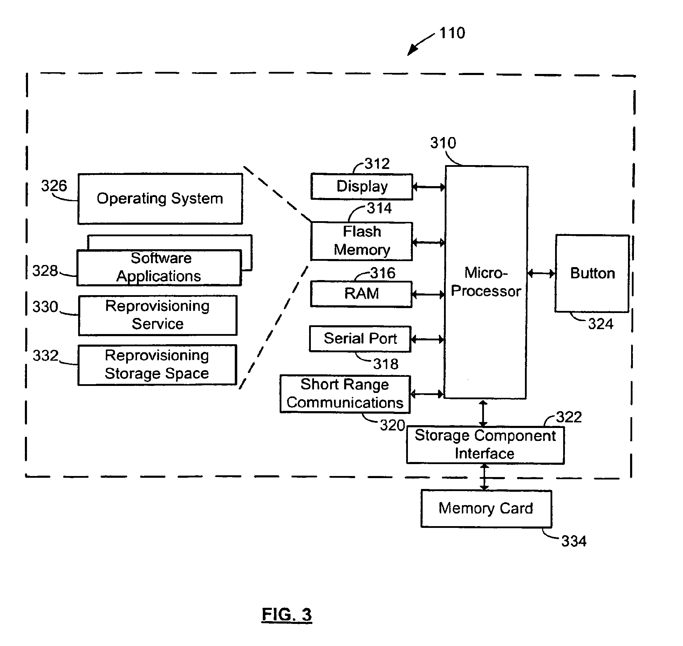

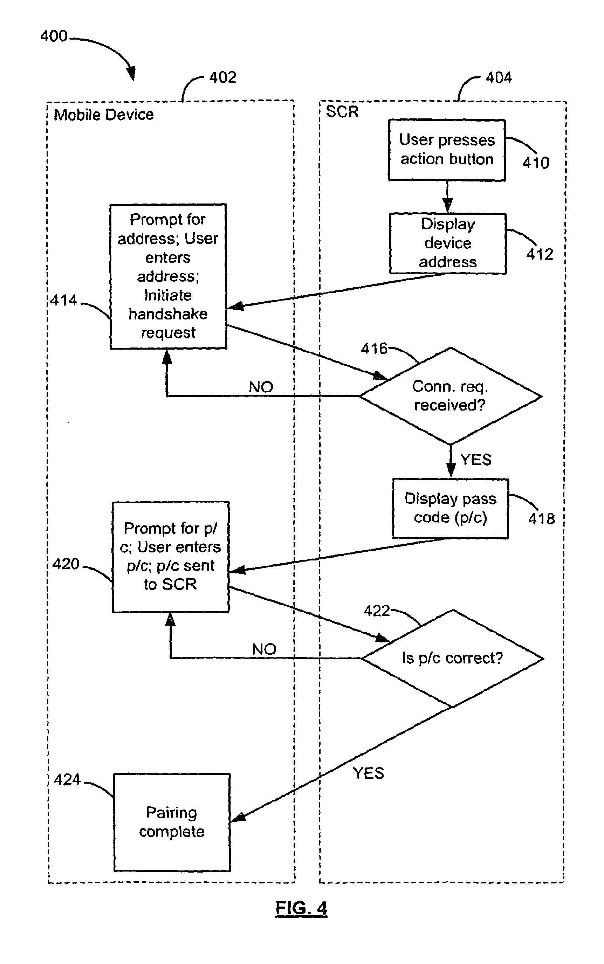

According to example embodiments, the software applications 242 of the mobile device 100 further include a reprovisioning service 248 that may be used to backup and/or restore data from the RAM 220 and/or the flash memory 218 (e.g., either the application and operating system space 236 or the user data space 238) to the smart card reader 110 shown in FIG. 1 and described in more detail below in connection with FIG. 3. The functioning of the reprovisioning service 248 will be described in greater detail below in connection with FIGS. 4, 5, and 6. The user data space includes data stored in the flash memory 218 by the microprocessor 216 related to the user or owner of the mobile device 100. Examples of data stored in the user data space include user stored data 250 (e.g., documents or data generated and saved by the user when using the software applications 242 or documents or data downloaded by the user through the network 18 , or through port 318, or short range communications sub-system 320), service books 252 (e.g., routing information enabling the mobile device 100 to communicate with the enterprise network 30 and/or wireless network 18 and access various data services such as e-mail, web browsing, instant messaging, etc.), public or private encryption keys 254 (e.g., S/MIME or PGP information granting the user the ability to secure his or her communications with other users and with various servers and services), and user preferences 256 (e.g., preferences related to the usage of and stored by the software applications 242 and preferences related to any aspect of the operation of the mobile device 100). The operating system code 240, code for specific device applications 242, or code components thereof, or any of the user data contained in the user data space 238 may be temporarily loaded into a volatile storage medium such as the RAM 220 during operation of the mobile device 100. Received communication signals and other data with information may also be stored in the RAM 220. In some embodiments, the mobile device 100 may include in addition to an internal flash memory 218 persistent memory carried on a SIM (Subscriber Identity Module) card or other removable device, and at least some of the user data space 238 may be allocated to the SIM card flash memory.

The stored program control (i.e., software applications 242) for the microprocessor 216 also includes a predetermined set of applications or code components or software modules that control basic device operations, for example, data and voice communication applications which are normally installed on the mobile device 100 as the software applications 242 during the manufacturing process. Further applications may also be loaded (i.e., downloaded) onto the mobile device 100 through the operation of networks described above for FIG. 1, the auxiliary I/O subsystem 222, the serial port 224, or the short-range communications subsystem 232. The downloaded code module or components are then installed by the user (or automatically) in the RAM 220 or the non-volatile program memory (e.g. the flash memory 218).

The serial port 224 comprises a USB type interface port for interfacing or synchronizing with another device, such as, a desktop computer (not shown). The serial port 224 is used to set preferences through an external device or software application. The serial port 224 is also used to extend the capabilities of the mobile device 100 by providing for information or software downloads, comprising user interface information, to the mobile device 100 other than through a wireless communication network, described above for FIG. 1. In one embodiment, the serial port 224 may be used to communicate with the smart card reader 110.

The short-range communications subsystem 232 provides an interface for communication between the mobile device 100 and other devices, comprising the smart card reader 110, to be described in greater detail in connection with FIG. 3, below. For example, the subsystem 232 may comprise an infrared communication link or channel, a wireless bus protocol such as a Bluetooth communications subsystem, or any other localized wireless means of communication.

Reference is next made to FIG. 3, which shows in greater detail an example embodiment of a secondary mobile device, namely smart card reader 110. The smart card reader 110 includes a controller comprising at least one microprocessor 310, which is suitably programmed to control the overall operation and functions of the smart card reader 110, and an output device 312 (e.g., a display module). The smart card reader 110 further includes peripheral devices or subsystems such as a flash memory 314, a random access memory (RAM) 316, a serial port 318 (e.g., a USB port), a short-range communications subsystem 320 (e.g., an infrared transceiver, wireless bus protocol such as a Bluetooth system, or any other means of local communications), a storage component interface 322 (e.g., for a memory card or any other data storage device), and an input device 324 (e.g., a push button).

The microprocessor 310 operates under stored program control with code or firmware being stored in the flash memory 314 (or other type of non-volatile memory device or devices). As depicted in FIG. 3, the stored programs (e.g., firmware) include an operating system program or code module 326 and other programs or software applications indicated generally by reference 328. The software applications 328 of the smart card reader 110 further include a reprovisioning service 330 that may be used to backup data from and/or restore data to the mobile device 100 shown in FIG. 2. The operating system code 326, code for specific device applications 328, code for the reprovisioning service 330, or code components thereof, may be temporarily loaded into a volatile storage medium such as the RAM 316. Received communication signals and other data with information may also be stored in the RAM 316. The flash memory 314 may also contain space allocated to storage space for the reprovisioning service, indicated by reference 332. Additionally, the storage component interface 322 receives a removable memory card 334, providing additional storage space for the smart card reader 110. In one embodiment, the memory card 334 may be a smart card similar to the smart cards known to those skilled in the art. The functioning of the reprovisioning service 330 will be described in greater detail in relation to FIGS. 4, 5, and 6, below. While operation of the smart card reader 110 is described using a smart card, it will be understood by those skilled in the art that the smart card reader 110 may be designed using any suitable form of removable media without departing from the intended scope of the smart card reader 110.

The stored program control (i.e., software applications 328) for the microprocessor 310 also includes a predetermined set of applications or code components or software modules that control basic device operations, for example, management and security related control of the data of the smart card reader 110 and may be installed on the smart card reader 110 as a component of the software applications 328 during the manufacturing process. Further applications may also be loaded (i.e., downloaded) onto the smart card reader 110 through the operation of the serial port 318, the short-range communications subsystem 320, or from the memory card 334. The downloaded code module or components are then installed by the user (or automatically) in the RAM 316 or the non-volatile program memory (e.g., the flash memory 314).

The serial port 318 comprises a USB type interface port for interfacing or synchronizing with another device, such as, a desktop computer (not shown), or the mobile device 100 (FIG. 2). The serial port 318 is used to set preferences through an external device or software application or exchange data with a device such as the mobile device 100 to be stored on the memory card 334 that is plugged into the storage component interface 322 of the smart card reader 110. The serial port 318 is also used to extend the capabilities of the smart card reader 110 by providing for information or software downloads, comprising any user interface information, to the smart card reader 110.

The short-range communications subsystem 320 provides an interface for communication between the mobile device 100 and the smart card reader 110. In one embodiment, the short-range communications subsystem 320 includes an infrared communication link or channel. In another embodiment, the subsystem 320 comprises a wireless RF bus protocol such as a Bluetooth communications subsystem. However, the short-range communications subsystem 320 may comprise any suitable local wireless means of communication, so long as the short range communications subsystem 232 of the mobile device 100 (FIG. 2) is chosen to operate using the same protocol, thereby facilitating wireless communication between the mobile device 100 and the smart card reader 110. Any communications mechanism and/or protocol may be implemented for the short range communications subsystems 320 and 232, so long as the mobile device 100 and the smart card reader 110 can communicate with each other when within physical proximity.

In some embodiments, for enhanced security purposes, a mobile device 100 must be in at least periodic communication with its associated smart card reader 110 through short range communications system 232 to receive authorization information stored on the smart card 334 in order for a user to use some or all of the functionality of the mobile device 100. The authorization information stored on the smart card will typically include unique information for a designated user of the mobile device 100. Such a configuration mitigates against unauthorized use of a mobile device 100 that becomes separated (i.e. out of communications range) from its associated smart card reader 110. According to example embodiments, in addition to providing the enhanced security functionality, the smart card reader 110 is also used to backup data to provision its associated mobile device 10, as will be described in greater detail below.

Referring now to both FIGS. 2 and 3, during normal operation of the mobile device 100, the flash memory 218 provides a secure and reliable means of storage for the application and operating system space 236 and the user data space 238 provided therein. The application and operating system space 236 is particularly reliable since this logical partition of the flash memory 218 is typically subject to strict access rules by the software applications 242 and by the user. The application and operating system space 236 may even be designated as read only, thereby bolstering the integrity of the data contained therein. However, occasionally, the user may find that the data stored in the user data space 238 has become erased or corrupted. Alternatively, the microprocessor 216 may automatically determine that some of the contents of the user data space 238 has become improperly erased or corrupted. For example, this may occur due to accidental deletion, a bug in one of the software applications 242, a coded virus, malicious use by another user, or an erase-data command received from the system administrator in order to prevent unauthorised access to the data on the mobile device 100. Since the service books 252 and encryption keys 254 are stored in the user data space 238, such corruption or deletion may render the mobile device 100 incapable of communicating with the wireless network 18 and/or enterprise network 30, thereby making the mobile device 100 virtually useless to the user if the user needs to retrieve new email or other data distributed over these networks. Additionally, a time may arise when the user may wish to obtain a new mobile device and copy some or all of the data in the user data space 238 to the new mobile device. If the user is away from his personal computer (e.g., travelling), the conventional means of performing a synchronization through a cradle is not available. In addition, some conventional cradle synchronizations do not save information such as the service books 252 and the encryption keys 254. This information must in some cases be obtained directly from the network service provider or system administrator, thus requiring a trip to a store or service depot in the event that the user data space 238 becomes corrupted, or require contacting a system administrator to obtain the information.

In example embodiments, the smart card reader 110 can be used to reprovision its associated mobile device 10. For example, the reprovisioning service 248 and the reprovisioning service 330 function to establish local communication between the mobile device 100 and its associated smart card reader 110 such that the data in the user data space 238 can be backed up onto the memory card 334 and/or to the reprovisioning storage space 332 and is saved for future restoration when the user encounters an unexpected or inadvertent deletion or corruption of any element of the user data space 238. This backup may be configured to back up all data comprising the user stored data 250, the service books 252, the encryption keys 254, and/or the user preferences 256. Alternatively, this backup may be configured to back up only the service books 252 and the encryption keys 254 such that communication can be re-established with the wireless network 18 and/or enterprise network 30. The user stored data 250 and the user preferences 256 may then be restored using the wireless connection to the enterprise network 30 or a conventional cradle synchronization, if the user stored data 250 and the preferences 256 had been previously backed up to the user's desktop computer or a location accessible to the enterprise network 30.

Reference is next made to FIG. 4, which shows in flow chart form a pairing process 400 for use with the mobile device 100 (FIG. 2) and the smart card reader 110 (FIG. 3). Since the smart card reader 110 can be used to store sensitive information (e.g., security clearances, encryption keys, service books, personal data back-up, etc.), it is important in at least some embodiments that a secure method of authentication be available to prevent unauthorized access to the smart card reader 110 and/or the memory cards 234. To initialize the pairing process (400), the user first presses the action button on the smart card reader 110 (e.g., the button 324 shown in FIG. 3) at a first step 410. The smart card reader 110 responds by displaying (e.g., on the display 312 shown in FIG. 3) the device address of the smart card reader 110 (step 412). In one embodiment, the device address may be the unique 48 bit device address assigned to each Bluetooth device that is manufactured. The user, having physical possession of the smart card reader 110, then reads the unique device address from the display 312 and enters the device address into the mobile device 100 (e.g., using the keyboard 226 to enter the address into either the reprovisioning service 248 or a pairing application existing within the software applications 242 or the operating system 240 running on the mobile device 100, shown in FIG. 2) at the step indicated by reference 414. The mobile device 100 then initiates a handshaking request (e.g., using the short range communications subsystems 232 and 320, which provides a direct communications link between the mobile device 100 and smart card reader 110) with the smart card reader 110.

After the sm art card reader 110 displays the device address, it awaits the handshake request (decision step 416) from the mobile device 100. In at least some example embodiments an additional layer of security exists after handshaking occurs, requiring entry of a password, passcode or PIN. For example, in one embodiment, once handshaking is complete, the smart card reader 110 displays a pairing key or passcode (e.g., on the display 312) (step 418). The passcode may be either randomly generated or generated according to a predetermined algorithm such that the user must have physical possession of the smart card reader 110 to gain access to the smart card reader 110 (i.e., simply possessing the address of the smart card reader 110 is not sufficient to gain access, as the address is static and cannot be changed). Next, the user enters the displayed passcode into the mobile device 100 (e.g., using the keyboard 226 shown in FIG. 2), at a step indicated by reference 420. The passcode or a verification value derived from the passcode is sent back to the smart card reader 110 for verification (step 422). Once the passcode is correctly entered into the mobile device 100 and sent (either in its entirety or in the form of a verification value)to the smart card reader 110 and verified by the smart card reader 110, pairing is complete and a communication session is established between the mobile device 100 and the smart card reader 110 mobile device while the smart card reader 110 remains within range (e.g., physical proximity required for Bluetooth communications) of the mobile device 100.

Completing the pairing process 400 does not, in at least some example embodiments, grant the mobile device 100 full access to any data stored in the memory card 334 or the flash memory 314 of the Smart card reader 110 - as described below, in at least some embodiments, further password or pass code entry may be required to access some or all of the functionality provided by the smart card reader 110.In a example embodiments the reprovisioning service 248 can be used to: (a) backup the contents of the user data space 238 to either the memory card 334 or the flash memory 314 (or to a combination of memory card 334 and flash memory) so that the mobile device 100 may be reprovisioned in the future in the event of data corruption or inadvertent erasure of the user data space 238; or (b) in the event that corruption or erasure of the user data space 238 has occurred, reprovision the mobile device 100 from the SCR 110.

In one embodiment, backups of the user data space 238 may be performed automatically to the smart card reader 110 periodically when an active pairing connection exists between the mobile device 100 and the smart card reader 110. In some embodiments, backups may be performed according to a predetermined schedule and in the event an active pairing session does not exist when a backup is schedules, either the mobile device 100 or the smart card reader 110 may prompt the user to initiate the pairing process 400 to perform the backup, if so desired. In another example embodiment, the user can initiate that backup process. In another embodiment the mobile electric device 100 and the smart card reader 110 may be configured to automatically pair and perform the backup according to a predetermined schedule.

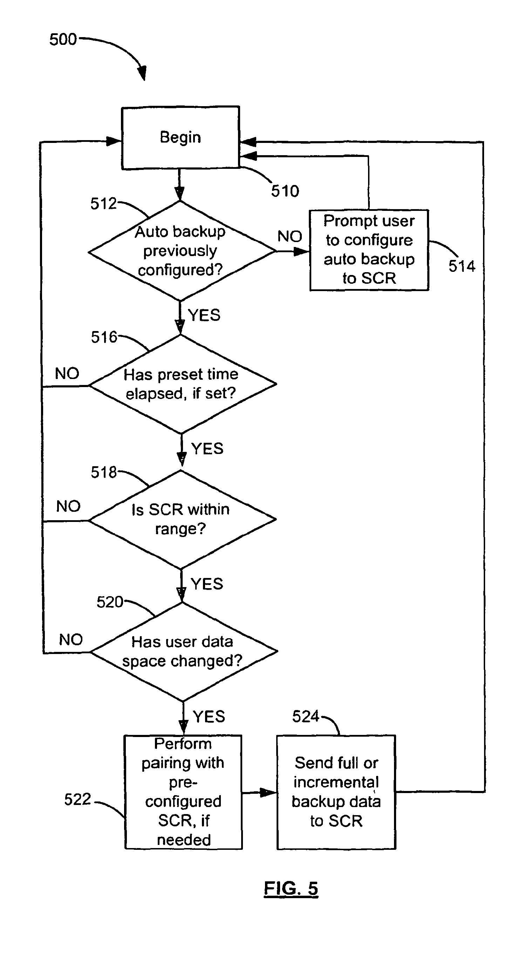

Reference is next made to FIG. 5 which shows in flow chart form an auto backup process 500 in accordance with one example embodiment. In one embodiment, the method 500 is executed by the reprovisioning service 248 in the mobile device 100 (FIG. 2). The method 500 begins at a step 510. Next, it is determined if the auto backup function of the reprovisioning service 248 has been previously configured (e.g., by the user of the mobile device 100 and the smart card reader 110, or by the system administrator) to perform automatic backup data updates of the user data space 238 to the smart card reader 110 (step 512). If the automatic update feature has not been previously configured, the user of the mobile device 100 is prompted to configure the feature so that automatic updates may be performed in the future (step 514). At the step 514, the user may either configure the automatic update feature or disable automatic aspects of the reprovisioning service 248 such that the process 500 will not run again without an explicit request from the user. The process then returns to the beginning step 510. If the automatic update feature has been previously configured by the user, it is determined whether the user had previously selected that a preset time span must elapse before a new backup is performed and if the time span has elapsed (step 516). If a preset time span was selected and has not elapsed, the process 500 returns to the beginning 510. If a preset time span was not selected or was selected and has elapsed, it is determined if the specific smart card reader 110 that was configured to operate with the auto backup process is within range (step 518). If the smart card reader 110 is not within range, the process 500 returns to the beginning 510. If the smart card reader 110 is within range of the mobile device 100, it is determined if the contents of the user data space 238 have changed (step 520). If the contents of the user data space 238 have not changed, the process 500 returns to the step 510 and any preset time span that must occur between backups is reset. If the contents of the user data space 238 have changed, a pairing procedure is performed between the mobile device 100 and the smart card reader 110, if needed (e.g., if the mobile device 100 and the smart card reader 110 are not already paired) (step 522). In one embodiment, the reprovisioning services 248 and 330 contain provisions to prompt the user to initiate pairing between the mobile device 100 and the specific smart card reader 110 that was configured to work with the mobile device 100 for the purposes of performing the automatic backup so that minimal user intervention is required. Next, either a full or incremental backup data set is sent to the smart card reader 110 depending on preferences set by the user when the automatic backup feature was configured (step 524). Once the backup is complete, any preset time span that must occur between backups is reset and the process returns to the beginning step 510. In the case of a user-initiated backup, a process 500 sim ilar to that shown in Figure 5 can be used, om itting steps 512 and 516..

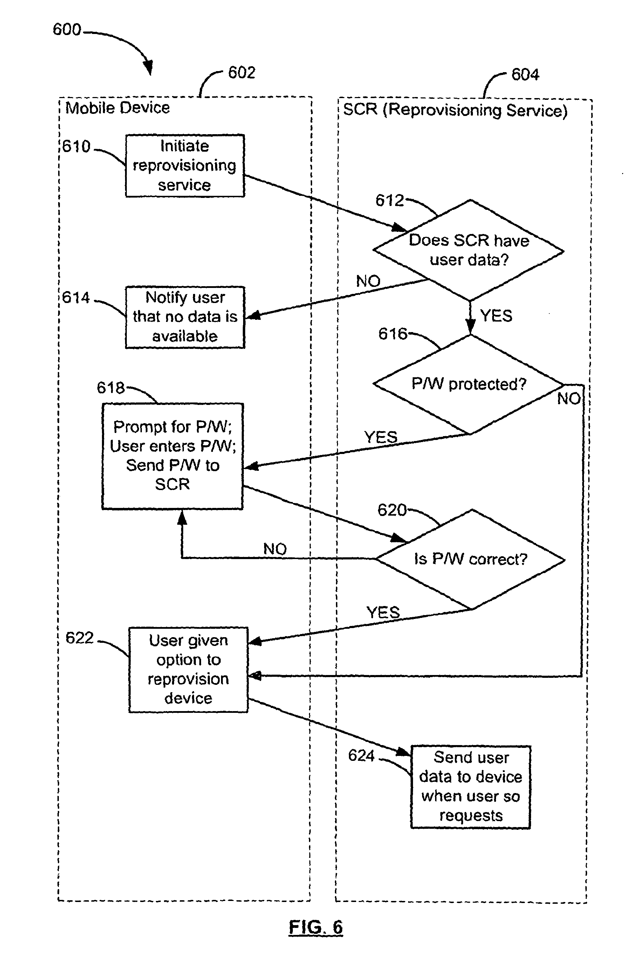

Reference is next made to FIG. 6 which shows in flow chart form a reprovisioning method 600 in accordance with one embodiment. If the user of the mobile device 100 is away from the computer that is typically used for synchronization with the mobile device 100, and the user data space 238 becomes erased or corrupted, the user may be left with a functionally limited mobile device 100 that is incapable of communicating with wireless network 18 and/or the enterprise network 30 of the system 10 (FIG. 1). I n such a situation, the reprovisioning method 600 may be used to reprovision the mobile device 100 following pairing process 400, thus restoring the user data space 238 back to the state the user data space 238 was in when the last backup was performed to the smart card reader 110. As a precondition to reprovisioning method 600, the mobile device 100 and smart card reader 110 will have been paired through pairing process 400 and be in a paired state when method 600 is carried out. Reprovisioning method 600 restores the service books 252 (FIG. 2) and public and private encryption keys 254 (FIG. 2) needed to re-establish communication with the system 10, as well as the user stored data 250 and the user preferences 256, if so configured. After paring between the mobile device 100 and the smart card reader 110 is established through the pairing process 400, the reprovisioning service 248 (FIG. 2) can be used to restore the user data space 238. First, the reprovisioning service 238 is initiated (step 610). In some circumstances, the microprocessor 216 may be configured to automatically check, upon completion of or as part of the pairing process 400, if corruption of the user data space 238 has occurred, and if so the device 100 may automatically commence reprovisioning process 600. Alternatively, process 600 may be commenced in response to user selection of a reprovisioning option through the mobile device 10 on completion of or during the pairing process 400. The initiation of the reprovisioning service 248 causes the mobile device 100 to communicate with the smart card reader 110 (e.g., via a Bluetooth connection) and initiates the smart card reader reprovisioning service 330. The reprovisioning service 330 checks to see if the smart card reader 110 has user data pertaining to the mobile device 100 or pertaining to the user initiating the request (step 612). If no data exists, the user is notified (e.g., on the display 210 shown in FIG. 2) that no such data exists. As indicated above, in at least some example embodiments entry of the passcode in pairing process 400 is not sufficient to allow access the mobile device 100 to have access to backup user data on the smart card reader 110. Thus, if backup data does exist (e.g., on the memory card 334 or in the reprovisioning storage space 332), the reprovisioning service 330 checks to see if a further passcode is required for reprovisioning (step 616) (in which case, a reprovisioning passcode known to the device user or other shared secret will have been previously stored on the smart card reader 110). If a reprovisioning passcode is required, the reprovisioning service 330 sends a request for passcode entry to the mobile device 100 (e.g., to the reprovisioning service 248) and the mobile device 100 prompts the user for the reprovisioning passcode (step 618). The user enters the passcode into the mobile device 100 (e.g., using the keyboard 226 shown in FIG. 2) and mobile device 100 (e.g., the reprovisioning service 248) sends the reprovisioning passcode (or a verification value derived from the passcode) to the smart card reader 110 for verification (step 620). Once the correct password is verified, the user is given the option to reprovision the mobile device 100 (step 622) (or reprovisioning can be carried out without requirieng user confirmation in step 622). In some embodiments, the user would also arrive directly at the step 622 after the step 616 if the smart card reader is configured not to require a reprovising passcode. When the user chooses the option to reprovision the mobile device 100, a request is sent to the smart card reader 110 (e.g., to the reprovisioning service 330) and the smart card reader 110 retrieves the relevant data and sends it to the mobile device 100 (e.g., to the reprovisioning service 248) (step 624). The user data space 238 is then restored with the data that existed at the time of the last backup that was performed to the smart card reader 110, thus restoring the same functionality to the mobile device 100 that existed at the time of the last backup. In some embodiments, the user is not presented with the option to reprovision the device 100 at step 622, but rather reprovisioning just occurs automatically after correct password entry.

In the embodiments described above, pairing and reprovisioning communications between the mobile device 100 and its card reader 110 occurs through a short range wireless communications link. In some embodiments, such communications could alternatively be carried out through a wired link between the USB ports 224, 318 of the mobile device 100 and its associated card reader 110. Additionally, in some embodiments, the card reader 110 could be used to provision a new or replacement mobile device 110.

In example embodiments, the mobile device 100 and the smart card reader 110 are both configured to be small enough to be hand held and stored in a coat pocket or purse or belt mounted holster, for example.

The above-described embodiments of the present application are intended to be examples only. Alterations, modifications and variations may be effected to the particular embodiments by those skilled in the art without departing from the scope of the application, which is defined by the claims appended hereto.

## Claims

1. A mobile communications device provisioning system, comprising:
a mobile communications device (100), comprising:
a first controller comprising at least one processor (216), for controlling operation of the mobile communications device (100);
a display (210) coupled to the controller for displaying information;
a user input device (216) coupled to the device controller;
a storage element (218) coupled to the device controller for storing user data;
a radio frequency ("RF") communications system (212) for exchanging RF signals with a wireless network (18); and
a first short range communications system (232) coupled to the controller;
a smart card reader (110) comprising;
a second controller comprising at least one processor (310) for controlling operation of the smart card reader (110);
first means for storing data having provisioning data stored thereon, the provisioning data comprising service data which comprises service books (252), the service books (252) comprising routing information enabling the mobile communications device (100) to communicate over wireless network (18) and to access data services; and
a second short range communications system (320) coupled to the controller for exchanging signals with the short range communications system (232);
the mobile communications device controller and the smart card reader controller being collectively operable to establish a wireless communications link between the mobile communications device and smart card reader through the respective short range communications systems (232; 320), provision the mobile communications device (100) by sending at least some of the service data stored on the smart card reader through the wireless communications link, and store the service data sent through the wireless communications link on the storage element (218) of the mobile communications device (100);
wherein the first controller is operable to automatically determine if selected data stored on the storage element (218) that corresponds to the provisioning data has been erased or corrupted and, when provisioning data has been erased or corrupted, send a request to the smart card reader (110) to provision the mobile communications device (100) with the provisioning data after establishment of the communications link.

2. The system according to claim 1, wherein the smart card reader (110) further comprises:
second means (334) for storing data having authorization information stored thereon, the authorization information comprising information for authorizing a designated user to use at least selected functions of the mobile communications device (100).

3. The system of claim 1, wherein the smart card reader (110) further comprises:
a fixed storage element (314) coupled to the controller;
a storage component interface (322) coupled to the controller; and
a removable memory card (334) readable by the storage component interface (322) and having stored thereon authorization information for authorizing a designated user to use at least selected functions of the mobile communications device (100).

4. The system of claim 2 or claim 3, wherein the controller of the smart card reader (110) is operable to periodically transmit the authorization information to the mobile communications device (100), and wherein the controller of the mobile communications device (100) is operable to enable the at least selected functions of the mobile communications device (100) if the authorization information is received at periodic intervals of time.

5. The system of claim 3 or 4, wherein the provisioning data is stored on one or both of the fixed storage element (318) and removable memory card (334).

6. The system of claim 3 or 4, wherein the provisioning data is stored on the removable memory card (334).

7. The system of any one of claims 1 to 6, wherein the wireless communications link is implementable using a Bluetooth protocol.

8. The system of any one of claims 1 to 7, wherein the device controller is operable to periodically backup provisioning data stored on the mobile communications device (100) by transmitting updated provisioning data to the smart card reader (110) through the short range communications system (232) of the mobile communications device (100), and
wherein the controller of the smart card reader (110) is operable to receive the updated provisioning data through the short range communications system (232) of the smart card reader (110) and to store the updated provisioning data.

9. The system of any one of claims 1 to 8, wherein the provisioning data further comprises an encryption key (254) for encrypting and decrypting communications exchanged over the wireless network (18), wherein the mobile communications device controller and smart card reader controller are collectively operable to provision the mobile communications device (100) by sending the encryption key (254) stored on the smart card reader (110) through the wireless communications link and storing the encryption key (254) through the wireless communications link on the device storage element of the mobile communications device (100).

10. The system of any one of claims 1 to 9, wherein the smart card reader (110) further comprises:
a display (312) coupled to the smart card reader controller for displaying information; and
a user input device (324) coupled to the device controller of the smart card reader (110);
wherein to establish the wireless communications link the smart card reader controller is operable to:
i) display an address for the smart card reader (110) on the smart card reader display (312) in response to a predetermined user input through the user input device (324) of the smart card reader (110);
ii) display a passcode on the smart card reader display (312) after receiving through its short range communications system (320) a predetermined connection request from the mobile communications device (100); and
iii) receive passcode information through its short range communications system (320), verify that the received passcode information correlates with the displayed passcode and send an acknowledgement to the mobile communications device (100); and
wherein the mobile communications device controller is operable to:
i) send the predetermined connection request through its short range communications system (232) to the smart card reader (110) after receiving an input through the user input device (226) of the mobile communications device (100), the input comprising the address for the smart card reader (110); and
ii) send the passcode information through the short range communications (232) of the mobile communications device (100) to the smart card reader (110) after receiving an input through the user input device (226) of the mobile communications device (100) comprising the passcode.

11. The system of claim 10, wherein the controller of the smart card reader (110) is operable to, after the wireless communications link is established, send the at least some of the service data to the mobile communications device (100) only after successfully receiving transmission from the mobile communications device (100) information verifying that a further passcode was been successfully entered at the mobile communications device (100).

12. A method for provisioning a mobile communications device (100) from a smart card reader (110), the method comprising:
storing at the smart card reader (110) provisioning data for the mobile communications device (100), the provisioning data comprising service data which comprises service books (252), service books (252) comprising routing information enabling the mobile communications device (100) to communicate over wireless network (18) and to access data services;
automatically determining if provisioning data stored on the mobile communications device (100) has been erased or corrupted;
establishing a wireless communications link between the smart card reader and the mobile communications device;
sending a request to the smart card reader (110) to provision the mobile communications device (100) with the provisioning data after establishment of the communications link after establishing the wireless communications link when provisioning data has been erased or corrupted; and
sending the provisioning data over the wireless communications link from the smart card reader (110) to the mobile communications device (100) and storing the provisioning data at the mobile communications device (100).

13. The method of claim 12, further comprising storing at the smart card reader (110) authorizing information for authorizing a designated user to use at least selected functions of the mobile communications device (100).

14. The method of claim 13, further comprising periodically transmitting the authorization information over the wireless communications link from the smart card reader (110) to the mobile communications device (100), and enabling the at least selected functions of the mobile communications device (100) if the authorization information is received at periodic intervals of time.

15. The method of any one of claims 12 to 14, wherein the provisioning data is stored to one or both of a fixed storage element (314) of the smart card reader (110) and a removable memory card readable (334) by the smart card reader (110).

16. The method of any one of claims 12 to 14, wherein the provisioning data is stored to a removable memory card readable (334) by the smart card reader (110).

17. The method of any one of claims 12 to 16, wherein the wireless communications link Is implemented using a Bluetooth protocol.

18. The method of any one of claims 12 to 17, further comprising periodically backing up provisioning data stored at the mobile communications device (100) by transmitting updated provisioning data to the smart card reader (110) and storing the updated provisioning data.

19. The method of any one of claims 12 to 18, wherein the provisioning ata comprises an encryption key (254) for encrypting and decrypting communications exchanged over the wireless network (18).

20. The method of any one of claims 12 to 19, further comprising:
displaying an address for the smart card reader (100) on a display (312) of the smart card reader (110) in response to a predetermined user input on the smart card reader (100);
displaying a passcode on the display of the smart card reader (110) after receiving through its short range communications system (320) a predetermined connection request from the mobile communications device (100); and
receiving passcode information on the smart card reader (110) from the mobile communications device (100) through its short range communications system (232);
verifying on the smart card reader (110) that the received passcode information correlates with the displayed passcode; and
sending an acknowledgement from the smart card reader (110) to the mobile communications device (100).

21. The method of claim 20, further comprising:
sending at least some of the service data from the smart card reader (110) to the mobile communications device (100) after receiving from the mobile communications device information verifying that a further passcode was successfully entered at the mobile communications device (100).

22. A smart card reader, comprising:
first means for storing data having provisioning data stored thereon, the provisioning data comprising service data which comprises service books (252), service books (252) comprising routing information enabling a mobile communications device (100) to communicate over wireless network (18) and to access data services;
means for establishing a wireless communications link with the mobile communications device (100);
means for receiving a request to provision the mobile communications device (100) with the provisioning data after establishment of the communications link when provisioning data has automatically been determined to be erased or corrupted via the controller of the mobile communications device (100); and
means for sending the provisioning data over the wireless communications link to the mobile communications device (100).

23. The smart card reader of claim 22, further comprising:
second means for storing data having authorizing information stored thereon, the authorizing information comprising information for authorizing a designated user to use at least selected functions of the mobile communications device (100).

24. The smart card reader of claim 22, further comprising:
a fixed storage element (314) coupled to the controller;
a storage component interface (322) coupled to the controller; and
a removable memory card readable (334) by the storage component Interface (322) and having stored thereon the authorization information for authorizing a designated user to use at least selected functions of the mobile communications device (100).

25. The smart card reader of claim 24, wherein the provisioning data is stored on one or both of the fixed storage element (314) and removable memory card (334).

26. The smart card reader of claim 24, wherein the provisioning data is stored on the removable memory card (334).

27. A computer program product comprising a computer readable medium having program code for causing a smart card reader (110) to implement the method of any one of claims 12 to 21 when the program code is executed by a processor of the smart card reader (110).

## Patentansprüche

1. Versorgungssystem für eine mobile Kommunikationsvorrichtung, das aufweist:
eine mobile Kommunikationsvorrichtung (100), die aufweist:
eine erste Steuervorrichtung, die zumindest einen Prozessor (216) aufweist, zum Steuern eines Betriebs der mobilen Kommunikationsvorrichtung (100);
eine Anzeige (210), die mit der Steuervorrichtung verbunden ist, zum Anzeigen von Information;
eine Benutzereingabevorrichtung (216), die mit der Vorrichtungssteuervorrichtung verbunden ist;
ein Speicherelement (218), das mit der
Vorrichtungssteuervorrichtung verbunden ist, zum Speichern von Benutzerdaten;
ein Funkfrequenz(RF - radio frequency)-Kommunikationssystem (212) zum Austauschen von RF-Signalen mit einem drahtlosen Netzwerk (18); und
ein erstes Nahbereichskommunikationssystem (232), das mit der Steuervorrichtung verbunden ist;
einen Chipkarte- bzw. Smartcard-Leser (110), der aufweist:
eine zweite Steuervorrichtung, die zumindest einen Prozessor (310) aufweist zum Steuern eines Betriebs des Chipkarte-Lesers (110); erste Mittel zum Speichern von Daten, die Versorgungsdaten darauf gespeichert haben, wobei die Versorgungsdaten Dienstdaten aufweisen, die Dienstbücher (252) aufweisen, wobei die Dienstbücher (252) Routing-Information aufweisen, die es der mobilen Kommunikationsvorrichtung (100) ermöglicht, über das drahtlose Netzwerk (18) zu kommunizieren und auf Datendienste zuzugreifen; und
ein zweites Nahbereichskommunikationssystem (320), das mit der Steuervorrichtung verbunden ist, zum Austauschen von Signalen mit dem Nahbereichskommunikationssystem (232);
wobei die Steuervorrichtung der mobilen Kommunikationsvorrichtung und die Steuervorrichtung des Chipkarte-Lesers zusammen betriebsfähig sind, eine drahtlose Kommunikationsverbindung zwischen der mobilen Kommunikationsvorrichtung und dem Chipkarte-Leser über die jeweiligen Nahbereichskommunikationssysteme (232; 320) herzustellen, die mobile Kommunikationsvorrichtung (100) zu versorgen durch Senden zumindest einiger der Dienstdaten, die auf dem Chipkarte-Leser gespeichert sind,
über die drahtlose Kommunikationsverbindung, und die Dienstdaten, die über die drahtlose Kommunikationsverbindung gesendet werden, auf dem Speicherelement (218) der mobilen Kommunikationsvorrichtung (100) zu speichern;
wobei die erste Steuervorrichtung betriebsfähig ist, automatisch zu bestimmen, ob ausgewählte Daten, die auf dem Speicherelement (218) gespeichert sind, die den Versorgungsdaten entsprechen, gelöscht oder beschädigt wurden, und wenn Versorgungsdaten gelöscht oder beschädigt wurden, eine Anforderung an den Chipkarte-Leser (110) zu senden, die mobile Kommunikationsvorrichtung (100) mit den Versorgungsdaten zu versorgen, nach einer Herstellung der Kommunikationsverbindung.

2. System gemäß Anspruch 1, wobei der Chipkarte-Leser (110) weiter aufweist:
zweite Mittel (334) zum Speichern von Daten, die Autorisierungsinformation darauf gespeichert haben, wobei die Autorisierungsinformation Information aufweist zum Autorisieren eines bestimmten Benutzers, zumindest ausgewählte Funktionen der mobilen Kommunikationsvorrichtung (100) zu verwenden.

3. System gemäß Anspruch 1, wobei der Chipkarte-Leser (110) weiter aufweist:
ein festes Speicherelement (314), das mit der Steuervorrichtung verbunden ist;
eine Speicherkomponentenschnittstelle (322), die mit der Steuervorrichtung verbunden ist; und
eine entfernbare Speicherkarte (334), die durch die Speicherkomponentenschnittstelle (322) lesbar ist und darauf Autorisierungsinformation zum Autorisieren eines bestimmten Benutzers gespeichert hat, zumindest ausgewählte Funktionen der mobilen Kommunikationsvorrichtung (100) zu verwenden.

4. System gemäß Anspruch 2 oder Anspruch 3, wobei die Steuervorrichtung des Chipkarte-Lesers (110) betriebsfähig ist, die Autorisierungsinformation regelmäßig an die mobile Kommunikationsvorrichtung (100) zu übertragen, und wobei die Steuervorrichtung der mobilen Kommunikationsvorrichtung (100) betriebsfähig ist, zumindest die ausgewählten Funktionen der mobilen Kommunikationsvorrichtung (100) zu aktivieren, wenn die Autorisierungsinformation in periodischen Zeitintervallen empfangen wird.

5. System gemäß Anspruch 3 oder 4, wobei die Versorgungsdaten auf einem oder beiden des festen Speicherelements (318) und der entfernbaren Speicherkarte (334) gespeichert sind.

6. System gemäß Anspruch 3 oder 4, wobei die Versorgungsdaten auf der entfernbaren Speicherkarte (334) gespeichert sind.

7. System gemäß einem der Ansprüche 1 bis 6, wobei die drahtlose Kommunikationsverbindung unter Verwendung eines Bluetooth-Protokolls implementiert werden kann.

8. System gemäß einem der Ansprüche 1 bis 7, wobei die Vorrichtungssteuervorrichtung betriebsfähig ist, regelmäßig Versorgungsdaten zu sichern (backup), die auf der mobilen Kommunikationsvorrichtung (100) gespeichert sind, durch Übertragen von aktualisierten Versorgungsdaten an den Chipkarte-Leser (110) über das Nahbereichskommunikationssystem (232) der mobilen Kommunikationsvorrichtung (100), und
wobei die Steuervorrichtung des Chipkarte-Lesers (110) betriebsfähig ist, die aktualisierten Versorgungsdaten über das Nahbereichskommunikationssystem (232) des Chipkarte-Lesers (110) zu empfangen und die aktualisierten Versorgungsdaten zu speichern.

9. System gemäß einem der Ansprüche 1 bis 8, wobei die Versorgungsdaten weiter einen Verschlüsselungsschlüssel (254) aufweisen zum Verschlüsseln und Entschlüsseln von Kommunikation, die über das drahtlose Netzwerk (18) ausgetauscht wird, wobei die Steuervorrichtung der mobilen Kommunikationsvorrichtung und die Steuervorrichtung des Chipkarte-Lesers zusammen betriebsfähig sind, die mobile Kommunikationsvorrichtung (100) zu versorgen durch Senden des Verschlüsselungsschlüssels (254), der auf dem Chipkarte-Leser (110) gespeichert ist, über die drahtlose Kommunikationsverbindung und Speichern des Verschlüsselungsschlüssels über die drahtlose Kommunikationsverbindung auf dem Vorrichtungsspeicherelement der mobilen Kommunikationsvorrichtung (100).

10. System gemäß einem der Ansprüche 1 bis 9, wobei der Chipkarte-Leser (110) weiter aufweist:
eine Anzeige (312), die mit der Steuervorrichtung des Chipkarte-Lesers verbunden ist, zum Anzeigen von Information; und
eine Benutzereingabevorrichtung (324), die mit der
Vorrichtungssteuervorrichtung des Chipkarte-Lesers (110) verbunden ist;
wobei zur Herstellung der drahtlosen Kommunikationsverbindung die Steuervorrichtung des Chipkarte-Lesers betriebsfähig ist:
i) eine Adresse für den Chipkarte-Leser (110) auf der Chipkarte-Leseranzeige (312) anzuzeigen in Reaktion auf eine vorgegebene Benutzereingabe durch die Benutzereingabevorrichtung (324) des Chipkarte-Lesers (110);
ii) einen Passcode auf der Chipkarte-Leseranzeige (312) anzuzeigen nach einem Empfangen durch ihr Nahbereichskommunikationssystem (320) einer vorgegebenen Verbindungsanforderung von der mobilen Kommunikationsvorrichtung (100); und
iii) eine Passcode-Information durch ihr
Nahbereichskommunikationssystem (320) zu empfangen, zu verifizieren, dass die empfangene Passcode-Information dem angezeigten Passcode entspricht und eine Bestätigung an die mobile Kommunikationsvorrichtung (100) zu senden; und
wobei die Steuervorrichtung der mobilen Kommunikationsvorrichtung betriebsfähig ist:
i) die vorgegebene Verbindungsanforderung über ihr Nahbereichskommunikationssystem (232) an den Chipkarte-Leser (110) zu senden nach einem Empfang einer Eingabe durch die Benutzereingabevorrichtung (226) der mobilen Kommunikationsvorrichtung (100), wobei die Eingabe die Adresse für den Chipkarte-Leser (110) aufweist; und
ii) die Passcode-Information über die Nahbereichskommunikation (232) der mobilen Kommunikationsvorrichtung (100) an den Chipkarte-Leser (110) zu senden nach einem Empfang einer Eingabe durch die Benutzereingabevorrichtung (226) der mobilen Kommunikationsvorrichtung (100), die den Passcode aufweist.

11. System gemäß Anspruch 10, wobei die Steuervorrichtung des Chipkarte-Lesers (110) betriebsfähig ist, nachdem die drahtlose Kommunikationsverbindung hergestellt ist, zumindest einige der Dienstdaten an die mobile Kommunikationsvorrichtung (100) zu senden nur nach einem erfolgreichen Empfangen einer Übertragung von der mobilen Kommunikationsvorrichtung (100) einer Information, die verifiziert, dass ein weiterer Passcode erfolgreich an der mobilen Kommunikationsvorrichtung (100) eingegeben wurde.

12. Verfahren zur Versorgung einer mobilen Kommunikationsvorrichtung (100) von einem Chipkarte-Leser (110), wobei das Verfahren aufweist:
Speichern an dem Chipkarte-Leser (110) von Versorgungsdaten für die mobile Kommunikationsvorrichtung (100), wobei die Versorgungsdaten Dienstdaten aufweisen, die Dienstbücher (252) aufweisen, wobei die Dienstbücher (252) Routing-Information aufweisen, die es der mobilen Kommunikationsvorrichtung (100) ermöglicht, über das drahtlose Netzwerk (18) zu kommunizieren und auf Datendienste zuzugreifen;
automatisches Bestimmen, ob Versorgungsdaten, die auf der mobilen Kommunikationsvorrichtung (100) gespeichert sind, gelöscht oder beschädigt wurden;
Herstellen einer drahtlosen Kommunikationsverbindung zwischen dem Chipkarte-Leser und der mobilen Kommunikationsvorrichtung;
Senden einer Anforderung an den Chipkarte-Leser (110), die mobile Kommunikationsvorrichtung (100) mit den Versorgungsdaten zu versorgen nach einer Herstellung der drahtlosen Kommunikationsverbindung, wenn Versorgungsdaten gelöscht oder beschädigt wurden; und
Senden der Versorgungsdaten über die drahtlose Kommunikationsverbindung von dem Chipkarte-Leser (110) an die mobile Kommunikationsvorrichtung (100) und Speichern der Versorgungsdaten an der mobilen Kommunikationsvorrichtung (100).

13. Verfahren gemäß Anspruch 12, das weiter aufweist ein Speichern an dem Chipkarte-Leser (110) von Autorisierungsinformation zum Autorisieren eines bestimmten Benutzers, zumindest ausgewählte Funktionen der mobilen Kommunikationsvorrichtung (100) zu verwenden.

14. Verfahren gemäß Anspruch 13, das weiter aufweist regelmäßiges Übertragen der Autorisierungsinformation über die drahtlose Kommunikationsverbindung von dem Chipkarte-Leser (110) an die mobile Kommunikationsvorrichtung (100) und Aktivieren der zumindest ausgewählten Funktionen der mobilen Kommunikationsvorrichtung (100), wenn die Autorisierungsinformation in periodischen Zeitintervallen empfangen wird.

15. Verfahren gemäß einem der Ansprüche 12 bis 14, wobei die Versorgungsdaten auf einem oder beiden eines festen Speicherelements (318) des Chipkarte-Lesers (110) und einer entfernbaren Speicherkarte (334), die durch den Chipkarte-Leser (110) gelesen werden kann, gespeichert werden.

16. Verfahren gemäß einem der Ansprüche 12 bis 14, wobei die Versorgungsdaten auf einer entfernbaren Speicherkarte (334) gespeichert werden, die durch den Chipkarte-Leser (110) gelesen werden kann.

17. Verfahren gemäß einem der Ansprüche 12 bis 16, wobei die drahtlose Kommunikationsverbindung unter Verwendung eines Bluetooth-Protokolls implementiert wird.

18. Verfahren gemäß einem der Ansprüche 12 bis 17, das weiter aufweist ein regelmäßiges Sichern von Versorgungsdaten, die auf der mobilen Kommunikationsvorrichtung (100) gespeichert sind, durch Übertragen von aktualisierten Versorgungsdaten an den Chipkarte-Leser (110) und Speichern der aktualisierten Versorgungsdaten.

19. Verfahren gemäß einem der Ansprüche 12 bis 18, wobei die Versorgungsdaten einen Verschlüsselungsschlüssel (254) aufweisen zum Verschlüsseln und Entschlüsseln von Kommunikation, die über das drahtlose Netzwerk (18) ausgetauscht wird.

20. Verfahren gemäß einem der Ansprüche 12 bis 19, das weiter aufweist:
Anzeigen einer Adresse für den Chipkarte-Leser (110) auf einer Anzeige (312) des Chipkarte-Lesers in Reaktion auf eine vorgegebene Benutzereingabe auf dem Chipkarte-Leser (110);
Anzeigen eines Passcodes auf der Anzeige (312) des Chipkarte-Lesers nach einem Empfangen durch ihr Nahbereichskommunikationssystem (320) einer vorgegebenen Verbindungsanforderung von der mobilen Kommunikationsvorrichtung (100); und
Empfangen einer Passcode-Information auf dem Chipkarte-Leser (110) von der mobilen Kommunikationsvorrichtung (100) durch ihr Nahbereichskommunikationssystem (320);
Verifizieren auf dem Chipkarte-Leser (110), dass die empfangene Passcode-Information dem angezeigten Passcode entspricht; und
Senden einer Bestätigung von dem Chipkarte-Leser (110) an die mobile Kommunikationsvorrichtung (100).

21. Verfahren gemäß Anspruch 20, das weiter aufweist:
Senden zumindest einiger der Dienstdaten von dem Chipkarte-Leser (110) an die mobile Kommunikationsvorrichtung (100) nach einem Empfangen von der mobilen Kommunikationsvorrichtung einer Information, die verifiziert, dass ein weiterer Passcode erfolgreich an der mobilen Kommunikationsvorrichtung (100) eingegeben wurde.

22. Chipkarte-Leser, der aufweist:
erste Mittel zum Speichern von Daten, die Versorgungsdaten darauf gespeichert haben, wobei die Versorgungsdaten Dienstdaten aufweisen,
die Dienstbücher (252) aufweisen, wobei die Dienstbücher (252) Routing-Information aufweisen, die es einer mobilen Kommunikationsvorrichtung (100) ermöglicht, über das drahtlose Netzwerk (18) zu kommunizieren und auf Datendienste zuzugreifen;
Mittel zum Herstellen einer drahtlosen Kommunikationsverbindung mit der mobilen Kommunikationsvorrichtung (100);
Mittel zum Empfangen einer Anforderung, die mobile Kommunikationsvorrichtung (100) mit den Versorgungsdaten zu versorgen,
nach der Herstellung der Kommunikationsverbindung, wenn Versorgungsdaten automatisch als gelöscht oder beschädigt bestimmt wurden über die Steuervorrichtung der mobilen Kommunikationsvorrichtung (100); und
Mittel zum Senden der Versorgungsdaten über die drahtlose Kommunikationsverbindung an die mobile Kommunikationsvorrichtung (100).

23. Chipkarte-Leser gemäß Anspruch 22, der weiter aufweist:
zweite Mittel zum Speichern von Daten, die Autorisierungsinformation darauf gespeichert haben, wobei die Autorisierungsinformation Information aufweist zum Autorisieren eines bestimmten Benutzers, zumindest ausgewählte Funktionen der mobilen Kommunikationsvorrichtung (100) zu verwenden.

24. Chipkarte-Leser gemäß Anspruch 22, der weiter aufweist:
ein festes Speicherelement (314), das mit der Steuervorrichtung verbunden ist;
eine Speicherkomponentenschnittstelle (322), die mit der Steuervorrichtung verbunden ist; und
eine entfernbare Speicherkarte (334), die durch die Speicherkomponentenschnittstelle (322) lesbar ist und darauf die Autorisierungsinformation zum Autorisieren eines bestimmten Benutzers gespeichert hat, zumindest ausgewählte Funktionen der mobilen Kommunikationsvorrichtung (100) zu verwenden.

25. Chipkarte-Leser gemäß Anspruch 24, wobei die Versorgungsdaten auf einem oder beiden des festen Speicherelements (314) und der entfernbaren Speicherkarte (334) gespeichert sind.

26. Chipkarte-Leser gemäß Anspruch 24, wobei die Versorgungsdaten auf der entfernbaren Speicherkarte (334) gespeichert sind.

27. Computerprogrammprodukt, das ein Computer-lesbares Medium aufweist mit Programmcode, um einen Chipkarte-Leser (110) zu veranlassen, das Verfahren gemäß einem der Ansprüche 12 bis 21 zu implementieren, wenn der Programmcode durch einen Prozessor des Chipkarte-Lesers (110) ausgeführt wird.

## Revendications

1. Système d'approvisionnement pour dispositif de communications mobile, comprenant :
un dispositif de communications mobile (100), comprenant :
une première unité de commande comprenant au moins un processeur (216), destinée à commander le fonctionnement du dispositif de communications mobile (100) ;
un afficheur (210) couplé à l'unité de commande destiné à afficher des informations ;
un dispositif d'entrée utilisateur (216) couplé à l'unité de commande de dispositif ;
un élément de stockage (218) couplé à l'unité de commande de dispositif pour stocker des données d'utilisateur ;
un système de communications radiofréquence ("RF") (212) destiné à échanger des signaux RF avec un réseau sans fil (18) ; et
un premier système de communications courte portée (232) couplé à l'unité de commande ;
un lecteur de carte à puce (110) comprenant :
une seconde unité de commande comprenant au moins un processeur (310) destinée à commander le fonctionnement du lecteur de carte à puce (110) ;
un premier moyen destiné à stocker des données sur lequel sont stockées des données d'approvisionnement, les données d'approvisionnement comprenant des données de service qui comprennent des livres de service (252), les livres de service (252) comprenant des informations de routage permettant au dispositif de communications mobile (100) de communiquer sur le réseau sans fil (18) et d'avoir accès à des services de données ; et
un second système de communications courte portée (320) couplé à l'unité de commande pour échanger des signaux avec le système de communications courte portée (232) ;
l'unité de commande du dispositif de communications mobile et l'unité de commande du lecteur de carte à puce pouvant fonctionner collectivement pour établir une liaison de communications sans fil entre le dispositif de communications mobile et le lecteur de carte à puce par l'intermédiaire des systèmes de communications courte portée respectifs (232 ; 320), approvisionner le dispositif de communications mobile (100) en envoyant au moins une partie des données de service stockées sur le lecteur de carte à puce par l'intermédiaire de la liaison de communications sans fil, et stocker les données de service envoyées par l'intermédiaire de la liaison de communications sans fil sur l'élément de stockage (218) du dispositif de communications mobile (100) ;
dans lequel la première unité de commande peut fonctionner pour déterminer automatiquement si des données sélectionnées stockées sur l'élément de stockage (218) qui correspondent aux données d'approvisionnement, ont été effacées ou corrompues et, lorsque des données d'approvisionnement ont été effacées ou corrompues, pour envoyer une demande au lecteur de carte à puce (110) pour approvisionner le dispositif de communications mobile (110) avec les données d'approvisionnement après l'établissement de la liaison de communications.

2. Système de la revendication 1, dans lequel le lecteur de carte à puce (110) comprend en outre :
un second moyen (334) destiné à stocker des données sur lequel sont stockées des informations d'autorisation, les informations d'autorisation comprenant des informations destinées à autoriser un utilisateur désigné à utiliser au moins des fonctions sélectionnées du dispositif de communications mobile (100).

3. Système de la revendication 1, dans lequel le lecteur de carte à puce (110) comprend en outre :
un élément de stockage fixe (314) couplé à l'unité de commande ;
une interface de composant de stockage (322) couplée à l'unité de commande ; et
une carte mémoire amovible (334) lisible par l'interface de composant de stockage (322) et sur laquelle sont stockées des informations d'autorisation pour autoriser un utilisateur désigné à utiliser au moins des fonctions sélectionnées du dispositif de communications mobile (100).

4. Système de la revendication 2 ou de la revendication 3, dans lequel l'unité de commande du lecteur de carte à puce (110) peut fonctionner pour transmettre de manière périodique les informations d'autorisation au dispositif de communications mobile (100), et dans lequel l'unité de commande du dispositif de communications mobile (100) peut fonctionner pour activer les fonctions au moins sélectionnées du dispositif de communications mobile (100) si les informations d'autorisation sont reçues à intervalles temporels périodiques.

5. Système de la revendication 3 ou 4, dans lequel les données d'approvisionnement sont stockées sur l'un ou les deux de l'élément de stockage fixe (318) et de la carte mémoire amovible (334).

6. Système de la revendication 3 ou 4, dans lequel les données d'approvisionnement sont stockées sur la carte mémoire amovible (334).

7. Système de l'une quelconque des revendications 1 à 6, dans lequel la liaison de communications sans fil peut être mise en oeuvre en utilisant un protocole Bluetooth.

8. Système de l'une quelconque des revendications 1 à 7, dans lequel l'unité de commande de dispositif peut fonctionner pour sauvegarder de manière périodique des données d'approvisionnement stockées sur le dispositif de communications mobile (100) en transmettant des données d'approvisionnement mises à jour au lecteur de carte à puce (110) par l'intermédiaire du système de communications courte portée (232) du dispositif de communications mobile (100), et
dans lequel l'unité de commande du lecteur de carte à puce (110) peut fonctionner pour recevoir les données d'approvisionnement mises à jour par l'intermédiaire du système de communications courte portée (232) du lecteur de carte à puce (110) et pour stocker les données d'approvisionnement mises à jour.

9. Système de l'une quelconque des revendications 1 à 8, dans lequel les données d'approvisionnement comprennent en outre une clé de cryptage (254) destinée au cryptage et au décryptage de communications échangées sur le réseau sans fil (18), dans lequel l'unité de commande du dispositif de communications mobile et l'unité de commande du lecteur de carte à puce peuvent fonctionner collectivement pour approvisionner le dispositif de communications mobile (100) en envoyant la clé de cryptage (254) stockée sur le lecteur de carte à puce (110) par l'intermédiaire de la liaison de communications sans fil et en stockant la clé de cryptage (254) par l'intermédiaire de la liaison de communications sans fil sur l'élément de stockage de dispositif du dispositif de communications mobile (100).

10. Système de l'une quelconque des revendications 1 à 9, dans lequel le lecteur de carte à puce (110) comprend en outre :
un afficheur (312) couplé à l'unité de commande du lecteur de carte à puce pour afficher des informations ; et
un dispositif d'entrée utilisateur (324) couplé à l'unité de commande de dispositif du lecteur de carte à puce (110) ;
dans lequel, pour établir la liaison de communications sans fil, l'unité de commande du lecteur de carte à puce peut fonctionner pour :
i) afficher une adresse pour le lecteur de carte à puce (110) sur l'afficheur (312) du lecteur de carte à puce en réponse à une entrée prédéterminée d'un utilisateur par l'intermédiaire du dispositif d'entrée utilisateur (324) du lecteur de carte à puce (110) ;
ii) afficher un passcode sur l'afficheur (312) du lecteur de carte à puce après avoir reçu par l'intermédiaire de son système de communications courte portée (320) une demande de connexion prédéterminée du dispositif de communications mobile (100) ; et
iii) recevoir les informations de passcode par l'intermédiaire de son système de communications courte portée (320), vérifier qu'il y a corrélation entre les informations de passcode reçues et le passcode affiché et envoyer un accusé de réception au dispositif de communications mobile (100) ; et dans lequel l'unité de commande du dispositif de communications mobile peut fonctionner pour :
i) envoyer la demande de connexion prédéterminée par l'intermédiaire de son système de communications courte portée (232) au lecteur de carte à puce (110) après avoir reçu une entrée par l'intermédiaire du dispositif d'entrée utilisateur (226) du dispositif de communications mobile (100), l'entrée comprenant l'adresse du lecteur de carte à puce (110) ; et
ii) envoyer les informations de passcode par l'intermédiaire du système de communications courte portée (232) du dispositif de communications mobile (100) au lecteur de carte à puce (110) après avoir reçu une entrée par l'intermédiaire du dispositif d'entrée utilisateur (226) du dispositif de communications mobile (100) comprenant le passcode.

11. Système de la revendication 10, dans lequel l'unité de commande du lecteur de carte à puce (110) peut fonctionner pour n'envoyer, après établissement de la liaison de communications sans fil, l'au moins une partie des données de service au dispositif de communications mobile (100) qu'après avoir reçu avec succès une transmission provenant du dispositif de communications mobile (100) d'informations vérifiant qu'un passcode additionnel a été rentré avec succès au niveau du dispositif de communications mobile (100).

12. Procédé pour approvisionner un dispositif de communications mobile (100) à partir d'un lecteur de carte à puce (110), le procédé comprenant le fait :
de stocker au niveau du lecteur de carte à puce (110) des données d'approvisionnement pour le dispositif de communications mobile (100), les données d'approvisionnement comprenant des données de service qui comprennent des livres de service (252), les livres de service (252) comprenant des informations de routage permettant au dispositif de communications mobiles (100) de communiquer sur un réseau sans fil (18) et d'avoir accès à des services de données ;
de déterminer de manière automatique si des données d'approvisionnement stockées sur le dispositif de communications mobile (100) ont été effacées ou corrompues ;
d'établir une liaison de communications sans fil entre le lecteur de carte à puce et le dispositif de communications mobile ;
d'envoyer une demande au lecteur de carte à puce (110) pour approvisionner le dispositif de communications mobile (110) avec les données d'approvisionnement après établissement de la liaison de communications suite à l'établissement de la liaison de communications sans fil lorsque des données d'approvisionnement ont été effacées ou corrompues ; et
d'envoyer les données d'approvisionnement par l'intermédiaire de la liaison de communications sans fil à partir du lecteur de carte à puce (110) au dispositif de communications mobile (100) et stocker les données d'approvisionnement au niveau du dispositif de communications mobile (100).

13. Procédé de la revendication 12, comprenant en outre le fait de stocker au niveau du lecteur de carte à puce (110) des informations d'autorisation pour autoriser un utilisateur désigné à utiliser au moins des fonctions sélectionnées du dispositif de communications mobile (100).

14. Procédé de la revendication 13, comprenant en outre le fait de transmettre de manière périodique les informations d'autorisation par l'intermédiaire de la liaison de communications sans fil à partir du lecteur de carte à puce (110) au dispositif de communications mobile (100), et d'activer les fonctions au moins sélectionnées du dispositif de communications mobile (100) si les informations d'autorisation sont reçues à intervalles temporels périodiques.

15. Procédé de l'une quelconque des revendications 12 à 14, dans lequel les données d'approvisionnement sont stockées au niveau d'un ou de deux parmi un élément de stockage fixe (314) du lecteur de carte à puce (110) et une carte mémoire amovible (334) lisible par le lecteur de carte à puce (110).

16. Procédé de l'une quelconque des revendications 12 à 14, dans lequel les données d'approvisionnement sont stockées au niveau d'une carte mémoire amovible (334) lisible par le lecteur de carte à puce (110).

17. Procédé de l'une quelconque des revendications 12 à 16, dans lequel la liaison de communications sans fil est mise en oeuvre en utilisant un protocole Bluetooth.

18. Procédé de l'une quelconque des revendications 12 à 17, comprenant en outre le fait de sauvegarder de manière périodique des données d'approvisionnement stockées au niveau du dispositif de communications mobile (100) en transmettant des données d'approvisionnement mises à jour au lecteur de carte à puce (110) et de stocker les données d'approvisionnement mises à jour.

19. Procédé de l'une quelconque des revendications 12 à 18, dans lequel les données d'approvisionnement comprennent une clé de cryptage (254) pour crypter et décrypter des communications échangées sur le réseau sans fil (18) .

20. Procédé de l'une quelconque des revendications 12 à 19, comprenant en outre le fait :
d'afficher une adresse pour le lecteur de carte à puce (110) sur l'afficheur (312) du lecteur de carte à puce (110) en réponse à une entrée prédéterminée d'un utilisateur sur le lecteur de carte à puce (110) ;
d'afficher un passcode sur l'afficheur du lecteur de carte à puce (110) après avoir reçu par l'intermédiaire de son système de communications courte portée (320) une demande de connexion prédéterminée du dispositif de communications mobile (100) ; et
de recevoir des informations de passcode sur le lecteur de carte à puce (110) à partir du dispositif de communications mobile (100) par l'intermédiaire de son système de communications courte portée (232) ; et
de vérifier sur le lecteur de carte à puce (110) qu'il y a corrélation entre les informations de passcode reçues et le passcode affiché ; et
d'envoyer un accusé de réception du lecteur de carte à puce (110) au dispositif de communications mobile (100).

21. Procédé de la revendication 20, comprenant en outre le fait :
d'envoyer au moins une partie des données de service du lecteur de carte à puce (110) au dispositif de communications mobile (100) après avoir reçu du dispositif de communications mobile des informations vérifiant qu'un passcode additionnel a été rentré avec succès au niveau du dispositif de communications mobile (100).

22. Lecteur de carte à puce, comprenant :
un premier moyen pour stocker des données sur lequel sont stockées des données d'approvisionnement, les données d'approvisionnement comprenant des données de service qui comprennent des livres de service (252), les livres de service (252) comprenant des informations de routage permettant à un dispositif de communications mobile (100) de communiquer sur un réseau sans fil (18) et d'avoir accès à des services de données ;
un moyen pour établir une liaison de communications sans fil avec le dispositif de communications mobile (100) ;
un moyen pour recevoir une demande pour approvisionner le dispositif de communications mobile (100) avec les données d'approvisionnement après établissement de la liaison de communications lorsqu'on a déterminé automatiquement que des données d'approvisionnement ont été effacées ou corrompues par le biais de l'unité de commande du dispositif de communications mobile (100) ; et
un moyen pour envoyer les données d'approvisionnement par l'intermédiaire de la liaison de communications sans fil au dispositif de communications mobile (100).

23. Lecteur de carte à puce de la revendication 22, comprenant en outre :
un second moyen pour stocker des données sur lequel sont stockées des informations d'autorisation, les informations d'autorisation comprenant des informations destinées à autoriser un utilisateur désigné à utiliser au moins des fonctions sélectionnées du dispositif de communications mobile (100).

24. Lecteur de carte à puce de la revendication 22, comprenant en outre :
un élément de stockage fixe (314) couplé à l'unité de commande ;
une interface de composant de stockage (322) couplée à l'unité de commande ; et
une carte mémoire amovible (334) lisible par l'interface de composant de stockage (322) et sur laquelle sont stockées les informations d'autorisation destinées à autoriser un utilisateur désigné à utiliser au moins des fonctions sélectionnées du dispositif de communications mobiles (100).

25. Lecteur de carte à puce de la revendication 24, dans lequel les données d'approvisionnement sont stockées sur l'un ou les deux de l'élément de stockage fixe (314) et de la carte mémoire amovible (334).

26. Lecteur de carte à puce de la revendication 24, dans lequel les données d'approvisionnement sont stockées sur la carte mémoire amovible (334).

27. Produit-programme d'ordinateur comprenant un support lisible par ordinateur ayant un code de programme pour amener un lecteur de carte à puce (100) à mettre en oeuvre le procédé de l'une quelconque des revendications 12 à 21 lorsque le code de programme est exécuté par un processeur du lecteur de carte à puce (110).
